# EUROPEAN PATENT SPECIFICATION

(11) **EP 3 746 415 B1**
(45) Date of publication and mention of the grant of the patent: **02.07.2025**
(21) Application number: 19708156.5
(22) Date of filing: 29.01.2019
(51) Int. Cl.: C04B 11/00, C04B 11/02, C04B 11/30

(54) **METHOD OF PROCESSING PLASTERBOARDS**
VERFAHREN ZUR VERARBEITUNG VON GIPSPLATTEN
PROCÉDÉ DE TRAITEMENT DE PLAQUES DE PLÂTRE

(30) Priority: 30.01.2018 EP 18000070
(43) Date of publication of application: 09.12.2020
(73) Proprietor: Holcim Technology Ltd, 6300 Zug (CH)
(72) Inventor: KRUSPAN, Peter, 5113 Holderbank (CH); STEMMLER, Konrad, 5113 Holderbank (CH); DAGGE, Ludger, 5113 Holderbank (CH); LANGANKE, Melanie, 5113 Holderbank (CH)
(74) Representative: SONN Patentanwälte GmbH & Co KG
(86) International application number: PCT/IB2019/050702
(87) International publication number: WO 2019/150251

(56) References cited:
- EP-A1- 2 899 162
- CA-A1- 2 236 486
- JP-A- 2010 208 888
- JP-A- H1 036 149
- US-B1- 6 435 770

## Description

The invention relates to a method of processing plasterboards for recovering a calcium sulphate source for producing a hydraulic binder.

In particular, the invention relates to the treatment and recycling of alternative sources of calcium sulphate for their use as gypsum substitute in the production of hydraulic binders.

JP 2010 208888 A discloses a method of processing plasterboards for recovering a calcium sulphate source for producing a hydraulic binder.

EP 2 899 162 A1 discloses the synthesis and the use of calcium sulphate based hardening accelerators.

The production of Portland cement is done in several steps. The first consists in quarrying and preparing a raw mix of materials, mainly composed of a crushed limestone, clay, and corrective mineral elements. This raw mix is then heated to a temperature of about 1450°C in a cement kiln, where the mineral phases of the raw mix melt and chemically react to form Portland clinker. Once cooled, Portland clinker is always mixed with a source of calcium sulphate, and optionally with other constituents such as mineral components as defined in the European Standard EN-197-1. This blend is finally ground to a desired fineness, stage during which chemical additives such as grinding aids or cement quality improvers are added, before being used for the production of concrete, mortars, grouts or slurries.

Calcium sulphate is an essential constituent of Portland cement, as it is able to regulate the reactivity of the aluminate phases Portland clinker. Without a source of calcium sulphate, ground Portland clinker would set immediately upon addition of water, which would for example render transport and placing of concrete impossible. The source of calcium sulphate used for the manufacturing of cement is in most cases a natural or a synthetic gypsum, anhydrite, or mixtures thereof. Alternative sources of gypsum, such as phosphogypsum and treated phosphogypsum may also be used.

The requirement to include a source of calcium sulphate leads to some industrial and economic constraints. For example, natural gypsum is not available in every country and region of the world, and many countries need to import gypsum. This further negatively affects the environmental and CO₂ footprint of cement, and also increases its cost.

Also, in an increasing number of countries, regulatory frameworks on the disposal of used construction materials are being introduced and/or reinforced: the disposal of demolition and construction waste materials is more and more under close scrutiny. In practice, the fees related to landfilling these waste materials are increasing in many countries. A significant amount of these waste materials is composed of gypsum plasterboards that are used mostly for the construction of interior walls and panels in buildings.

Plasterboard is also known as dryboard, wallboard, gypsum panel, sheet rock, or gypsum board. Gypsum plasterboards are manufactured by mixing calcined gypsum with water and additives. The resulting slurry is continuously poured between layers of paper or cardboard, or sometimes layers of plastic or aluminum for special applications. The calcined gypsum reacts with water and recrystallizes in the form of gypsum, and the hardening is achieved by conveying the plasterboards through a drying oven. Various chemical additives are included to enhance the performance of the plasterboard and facilitate their production process:
- Foaming agents (air entrainers)
- Bonding agents to fix the cardboard on the gypsum core
- Wetting agents to enhance fluidity and reduce water demand
- Setting modifiers to adjust the fluidity
- Accelerators to speed up the final set during production
- Additives for specialty products (fire resistant gypsum, fiberglass or organic fiber gypsum to reduce brittleness, waterproof gypsum)

The chemical nature of the mentioned additives may include the following organic compounds:
- Silicones
- Paraffin waxes (long chain hydrocarbons)
- Bitumen
- Polyvinyl alcohol
- Fatty acids
- Alkyl ether sulfates / alkyl sulfates
- Cellulose fibers
- Rosin acid
- Starch

There is a growing need to have a viable method for recovering gypsum from waste plasterboards, and for finding and using other sources of calcium sulphate than those currently used for the production of hydraulic binders, such as Portland cement.

To recycle gypsum from plasterboard, the plasterboard has first to be separated from other construction and demolition waste, and then must be separated into a gypsum fraction and a cardboard fraction. This operation is currently undertaken by gypsum recycling facilities that are able to produce a ground powder that often still contains foreign materials such as remaining pieces of paper, thermal or sound isolation materials, or fibres. Using such a material directly as a substitute for calcium sulphate in the production of Portland cements would impact the quality of the cement, mainly because of the variety and of chemical additives that are used in plasterboards that affect the reactivity of Portland cements and the behaviour of resulting mortars or concrete. Furthermore, the nature and amounts of additives and other foreign materials would vary from one delivery to another, which would increase the variability of the cement quality.

Therefore, it is an object of this invention to provide a method of treatment of gypsum recovered from demolition waste in order to render it viable for its use as a substitute of gypsum in the manufacturing of Portland cements.

In order to solve this object the invention provides a method of processing plasterboards for recovering a calcium sulphate source for producing a hydraulic binder comprising the steps of
a) comminuting plasterboards or a gypsum fraction thereof so as to obtain plasterboard particles,
b) subjecting the plasterboard particles to a heat treatment at an elevated temperature so as to volatilize and/or decompose organic components present in the plasterboard particles.

The invention is based on the idea to remove or substantially reduce the content of organic additives contained in plasterboard in order to reduce the influence of varying amounts of such additives on the cement quality. In particular, it was found that gypsum from plasterboard recycling is drastically reducing the early and late strength when used instead of natural or flue gas desulfurization gypsum. For example, test series, wherein natural gypsum was replaced by secondary gypsum from plasterboard, showed that the 28d compressive strength was typically reduced by 4-10 MPa, which is critical in respect to the cement compliance with the specifications. The current hypothesis for the reduced efficiency of secondary gypsum is that even small amounts of various additives will block the cement hydration process (e.g., silicone, impregnators) and/or interfere with the regular development of dense mortar matrix (e.g., surfactants, air entrainers).

By conducting a heat treatment at an elevated temperature, the organic components contained in the plasterboard material are volatilized and/or decomposed. Reducing the content of the organic components on the one hand results in that the negative effect of some organic components on the compressive strength is reduced and on the other hand results in that the content of the organic components that would otherwise vary from one delivery to another can be standardized to a specific level so as to reduce the variability of the quality of the hydraulic binder.

According to the invention, the heat treatment comprises subjecting the plasterboard particles to a temperature in the range of 300°C - 550°C, preferably 350°C - 550°C, more preferably 400°C - 500°C.

According to a further preferred embodiment of the invention, the heat treatment comprises subjecting the plasterboard particles to a temperature of 300°C - 390°C, preferably 310°C - 350°C.

Tests have shown that the thermal degradation of the organic components starts at around 200°C, wherein a vast majority of the volatile organic components are released from the plasterboard particles at a temperature in the range of 300°C - 400°C, whereby the complete transformation (removal of all of the volatile organic components) takes place at a temperature of ≥ 400°C.

Unexpectedly, the applicant found out that for operating the method in an economically highly efficient manner a low temperature and/or a short treatment time of the plasterboard particles suffice for efficiently removing a vast majority of the organic components, while simultaneously providing for satisfactory compressive strength values of the resulting product. Hence, preferably the heat treatment of the plasterboard particles is carried out at a temperature of 300°C - 390°C, preferably 310°C - 350°C. According to the invention, the heat treatment is carried out for a time period of < 10 min, preferably 1-9 min, more preferably 2-6 min, more preferably 4-6 min.

The yield of the released volatile organic components depends on the gas atmosphere, in which the thermal treatment is conducted. The expulsion in a N₂ atmosphere and in a cement preheater exhaust gas showed similar yields. However, experiments in synthetic air (21 vol.-% O₂, 79 vol.-% N₂) showed a large reduction of the amount of released hydrocarbons. This indicates that at high O₂ contents the combustions of the organic precursors of the volatile organic components becomes more effective. It indicates that a thermal treatment of the plasterboard particles in air is favorable over a thermal treatment in kiln exhaust gases in respect to emissions from the treatment process. Therefore, a preferred embodiment of the inventions provides that step b) is carried out in an atmosphere that has an O₂-content of > 10 vol.%, preferably > 15 vol.-%. Alternatively, off gas from a heat exchanger for preheating raw meal for the cement production may also be used as an atmosphere for the thermal treatment of the plasterboard particles.

Within the scope of the invention, the term "plasterboard particles" refers to particles that result from the comminution of used plasterboards or from the comminution of a gypsum fraction that has been separated from plasterboard. In the second case, the plasterboard particles primarily comprise gypsum and organic components, wherein the heat treatment serves to volatilize or decompose the organic components. In the first case, the plasterboard particles comprise gypsum as well as a paper or cardboard fraction, wherein the heat treatment may be used not only to volatilize or decompose the organic components contained in the gypsum, but also to burn the paper or cardboard fraction.

If the gypsum shall be kept free from any ash resulting from the burning of the paper or cardboard fraction, the inventive method is conducted such that, before step a), a front and a back layer fraction, in particular a paper and/or cardboard fraction, is separated from a gypsum fraction of the plasterboard material. Said separation is preferably conducted mechanically. Alternatively, a front and a back layer fraction, in particular a paper and/or cardboard fraction, is separated from a gypsum fraction after step a), but before step b).

According to a second aspect, the invention refers to the use of a calcium sulphate source obtained by at least partially removing organic components from waste plasterboard material as a component in the production of a hydraulic binder. In particular, a calcium sulphate source obtained by the inventive method is used as the component in the production of a hydraulic binder.

Preferably, the calcium sulphate source is mixed with clinker and the resulting mixture is ground in order to obtain ordinary Portland cement.

In the following, the invention will be described in more detail with reference to the following tests and examples.

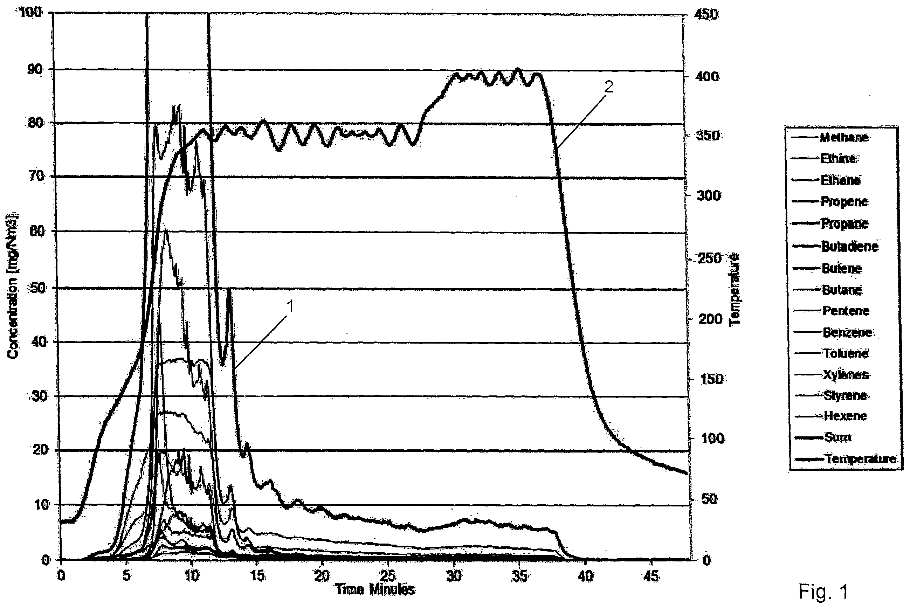

Moisture resistant plasterboard was used and the front and the back layer, in particular a paper, was removed so as to expose the gypsum fraction of the plasterboard. Thereafter, the gypsum fraction was comminuted and the plasterboard particles were subjected to a heat treatment as illustrated in Fig. 1. During the heat treatment the organic components of the particles were released into the atmosphere, wherein the content of the organic components in the atmosphere was measured. In particular, the content of methane, ethine, ethene, propene, propane, butadiene, butene, butane, pentene, benzene, toluene, xylene, styrene and hexen was measured. The content [mg/Nm³] sum of all components in the atmosphere is characterized by the curve 1. The temperature is represented by the curve 2.

The thermogram depicted in Fig. 1 shows that the thermal degradation of the organic components in secondary gypsum starts at around 200 °C and the majority of the volatile organic components release ends at around 400°C. The thermogram indicates that a treatment temperature of 400°C is suitable to destroy the chemical structures of the organic molecules in the plasterboard.

In the specific example shown in Fig. 1, the sample was heated to 350°C for 20 minutes and the temperature was then raised to 400°C. One sees that the majority of the volatile organic components (>85%) are released during the temperature ramping and the first 5 minutes at 350°C. After 20 minutes at 350°C around 94 % of the volatile organic components has been released and only a small additional amount of volatile organic components are released when further heating to 400°C for 10 minutes. This indicates that the major thermal degradation process of the organic precursor can be achieved by heating secondary gypsum to 400°C and residence times of some minutes. Also alkanes with up to 30 carbon atoms, which are present in the material will evaporate to large extent at 400°C.

It was observed, that said heat treatment can also effectively remove surfactants that are present in the gypsum. When pouring the secondary gypsum into water one observes the release of organic surfactants. Surfactants accumulate on the water surface and spread over the surface as they exhibit a spreading pressure. When the same material is heated to 350 and 400°C for 20 and 10 minutes, respectively, and subsequently poured into water, still some surface active compounds are released from the material, but to an around 20 times lower extent. This indicates that the hydrophobic compounds in the gypsum are widely destroyed by the thermal treatment at 400°C.

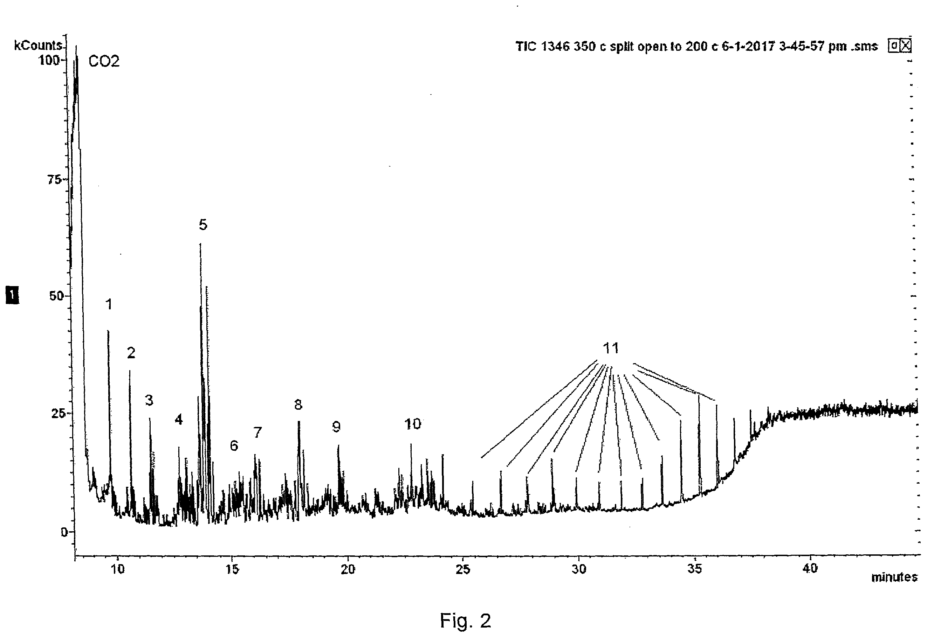

The mass spectrometric expulsion test that was used to detect volatile organic compounds in the test according to Fig. 1 cannot detect all volatile organic compounds. It is programmed to detect mainly volatile organic compounds with 6 or less carbon atoms. To also identify semi-volatile organic species and organic trace species released from the plasterboard, the gases released from the plasterboard sample at 350 °C have been analysed by gas-chromatography-mass spectrometry (GC-MS). By this method compounds with > 5 carbon atoms can be detected and identified. The gas chromatogram is shown in Figure 2. The released compounds are identified based on the mass spectrum. The released compounds as labeled in Fig. 2 are listed below:
- 1: furan, methyl furans (several isomers)
- 2: hexadienes, benzene (largest peak)
- 3: alkenes and substituted cycloalkanes (C6 and C7)
- 4: dienes or cycloalkenes (C7), octenes, toluene, methylcyclohexene
- 5: octenes (largest peaks), cycloalkanes (C8)
- 6: nonenes, ethylbenzene, xylenes (3 isomers), styrene
- 7: nonenes or cycloalkanes (C9)
- 8: nonenes or cycloalkanes (C9), C3-benzenes, decenes
- 9: C4-benzenes, undecenes, undecane
- 10: undecenes, undecanes, C5-benzenes
- 11: a series of mainly linear alkanes (C17- C30)

One observed that the secondary gypsum released a relatively unspecific mixture of hydrocarbons:
- The sample released relatively high amounts of alkenes (or cyclo-alkanes) with 6-11 carbon atoms. These alkenes arise from the degradation of macromolecules or polymers with a carbon backbone, but the observed alkenes are not indicative for a specific polymer and hence, could not be related to a precursor.
- Besides the alkenes, there were some common thermal degradation products such as substituted furans and mononuclear aromatic compounds. Also these compounds are unspecific as they can be found from a variety of macromolecular organic precursors (i.e. sugars, such as cellulose and starch).
- The sample released a heavy oil mixture (i.e. alkanes with 17-30 carbon atoms). Here the conclusion is that the secondary gypsum contains a heavy oil or paraffin wax. Likely a paraffin wax is used as a hydrophobic additive in plasterboard.
- Also fatty acids (C12-C20) are released from the sample. These compounds give broad peaks and are not clearly visible in the total ion chromatogram (i.e. Fig. 2). By this they are not annotated in the chromatogram. Fatty acids are surfactants used as air entrainers in plasterboard.
- The analysis did not indicate the presence of lignin sulfonates (no phenols) and silicones (no silicone fragments). These are two potential additives in plasterboard which are clearly not present.

Further, the effects of using heat treated gypsum in a hydraulic binder was investigated when compared to using gypsum recovered from used plasterboard that was not heat treated and compared to a conventional gypsum source.

### Example 1:

A Portland cement CEM I 42,5 N according to norm SN EN 197-1 (Normo 4 manufactured by Holcim Switzerland) was provided consisting of Portland cement clinker and 4 wt.-% calcium sulphate. The grinding fineness was 3,800 Blaine. Compressive strength tests were performed in order to study the influence of the various calcium sulphate sources on the compressive strength.

The following types of gypsum were used:

| | |
|---|---|
| Type 1: | CaSO₄ from a natural source |
| Type 2: | CaSO₄ recovered from used plasterboard (green) provided by STRABAG, no heat treatment |
| Type 3: | CaSO₄ recovered from used plasterboard (green) provided by STRABAG, heat treated for 2h at 500°C |
| Type 4: | CaSO₄ recovered from used plasterboard (green) provided by STRABAG, heat treated for 5h at 350°C |

| Compressive strength [MPa] acc. to EN 196-1 | Gypsum type | | | |
|---|---|---|---|---|
| | 1 | 2 | 3 | 4 |
| 1d | 17,2 | 14,7 | 16,5 | 16,3 |
| 2d | 30,4 | 26,7 | 28,5 | 27,6 |
| 7d | 44,5 | 38,2 | 42,4 | 41,5 |
| 28d | 54,3 | 45,3 | 51,5 | 49,7 |

It can be seen that the compressive strength is reduced at all stages (1d, 2d, 7d, 28d) when using non heat treated gypsum (Type 2) that was recovered from plasterboard, when compared to a conventional gypsum source (type 1). Heat treating the gypsum recovered from plasterboard (types 3 and 4) increases the compressive strength.

### Example 2:

A Portland cement CEM II/A-LL 52,5 N (Fluvio^{®} 5 manufactured by Holcim (Süddeutschland) GmbH) was provided consisting of Portland cement clinker and 10 wt.-% calcium sulphate. The grinding fineness was 4,500 Blaine. Compressive strength tests were performed in order to study the influence of the various calcium sulphate sources on the compressive strength.

The following types of gypsum were used:

| | |
|---|---|
| Type 1: | CaSO₄ from a natural source |
| Type 2: | CaSO₄ recovered from used plasterboard (green) provided by STRABAG, no heat treatment |
| Type 3: | CaSO₄ recovered from used plasterboard (green) provided by STRABAG, heat treated for 2h at 500°C |
| Type 4: | CaSO₄ recovered from used plasterboard (green) provided by STRABAG, heat treated for 5h at 350°C |

| Compressive strength [MPa] acc. to EN 196-1 | Gypsum type | | | |
|---|---|---|---|---|
| | 1 | 2 | 3 | 4 |
| 1d | 17,7 | 15,1 | 17,5 | 16,3 |
| 2d | 29,8 | 25,2 | 28,3 | 26,2 |
| 7d | 41,4 | 36,0 | 40,6 | 36,2 |
| 28d | 49,0 | 44,5 | 48,2 | 44,6 |

The same conclusions can be drawn with regard to the compressive strength as in Example 1.

### Example 3:

A Mortar System EN 196-1 was provided consisting of 95% Portland cement clinker (provided by Siggenthal) and 5% wt.-% calcium sulphate.

Compressive strength tests were performed in order to study the influence of the various calcium sulphate sources on the compressive strength.

The following types of gypsum were used:

| | |
|---|---|
| Type 1: | CaSO₄ from a natural source, no heat treatment |
| Type 2: | CaSO₄ from an unground waste gypsum sample (provided by SORTAG), heat treated for 5 min at 310°C, sieved to < 125µm. |

| Compressive strength [MPa] acc. to EN 196-1 | Gypsum type | |
|---|---|---|
| | 1 | 2 |
| 1d | 17,5 | 15,4 |
| 2d | 30,8 | 25,9 |

## Claims

1. Method of processing plasterboards for recovering a calcium sulphate source for producing a hydraulic binder, comprising the steps of
a) comminuting plasterboards or a gypsum fraction thereof so as to obtain plasterboard particles,
b) subjecting the plasterboard particles to a heat treatment at an elevated temperature so as to volatilize and/or decompose organic components present in the plasterboard particles,
wherein the heat treatment is carried out for a time period of < 10 min, preferably 1-9 min, more preferably 2-6 min, more preferably 4-6 min, and wherein the heat treatment comprises subjecting the plasterboard particles to a temperature in the range of 300°C - 550°C, preferably 350°C - 550°C, more preferably 400°C - 500°C.

2. Method according to claim 1, wherein the heat treatment comprises subjecting the plasterboard particles or the gypsum fraction thereof to a temperature of 300°C - 390°C, preferably 310°C - 350°C.

3. Method according to any one of claims 1 or 2, wherein, before or after step a), a front and a back layer fraction, in particular a paper and/or cardboard fraction, is separated from a gypsum fraction of the plasterboard material.

4. Method according to any one of claims 1, 2 or 3, wherein step b) is carried out in an atmosphere that has an O₂-content of > 10 vol.%, preferably > 15 vol.-%.

5. Use of a calcium sulphate source obtained by a method according to any one of claims 1 to 4 as a component in the production of a hydraulic binder.

6. Use according to claim 5, wherein the calcium sulphate source is mixed with clinker and the resulting mixture is ground in order to obtain ordinary Portland cement.

## Patentansprüche

1. Verfahren zur Verarbeitung von Gipskartonplatten zur Rückgewinnung einer Calciumsulfatquelle zur Herstellung eines hydraulischen Bindemittels, aufweisend die Schritte
a) Zerkleinern von Gipskartonplatten oder einer Gipsfraktion davon, um Gipskartonplattenpartikel zu erhalten,
b) Unterziehen der Gipskartonplattenpartikel einer Wärmebehandlung bei erhöhter Temperatur, um organische Bestandteile in den Gipskartonplattenpartikeln zu verflüchtigen und/oder zu zersetzen,
wobei die Wärmebehandlung für eine Zeitdauer von < 10 min, vorzugsweise 1-9 min, mehr bevorzugt 2-6 min, mehr bevorzugt 4-6 min durchgeführt wird und wobei die Wärmebehandlung aufweist, dass die Gipskartonplattenpartikel einer Temperatur im Bereich von 300 °C - 550 °C, vorzugsweise 350 °C - 550 °C, mehr bevorzugt 400 °C - 500 °C, unterworfen werden.

2. Verfahren nach Anspruch 1, wobei die Wärmebehandlung aufweist, dass die Gipskartonplattenpartikel oder die Gipsfraktion davon einer Temperatur von 300 °C - 390 °C, vorzugsweise 310 °C - 350 °C, unterworfen werden.

3. Verfahren nach einem der Ansprüche 1 oder 2, wobei vor oder nach Schritt a) eine Vorder- und Rücklagenfraktion, insbesondere eine Papier- und/oder Kartonfraktion, von einer Gipsfraktion des Gipskartonplattenmaterials abgetrennt wird.

4. Verfahren nach einem der Ansprüche 1, 2 oder 3, wobei Schritt b) in einer Atmosphäre durchgeführt wird, die einen O₂-Gehalt von > 10 Vol.-%, vorzugsweise > 15 Vol.-%, aufweist.

5. Verwendung einer nach einem der Ansprüche 1 bis 4 erhaltenen Calciumsulfatquelle als Bestandteil bei der Herstellung eines hydraulischen Bindemittels.

6. Verwendung nach Anspruch 5, wobei die Calciumsulfatquelle mit Klinker gemischt und das resultierende Gemisch gemahlen wird, um Portlandzement zu erhalten.

## Revendications

1. Méthode de traitement des plaques de plâtre pour récupérer une source de sulfate de calcium destinée à la production d'un liant hydraulique, comprenant les étapes de
a) broyage des plaques de plâtre ou d'une fraction de gypse de celles-ci afin d'obtenir des particules de plaque de plâtre,
b) soumission des particules de plaque de plâtre à un traitement thermique à température élevée afin de volatiliser et/ ou décomposer les composants organiques présents dans les particules de plaque de plâtre,
dans laquelle le traitement thermique est effectué pendant une période de < 10 min, de préférence 1-9 min, plus préférablement 2-6 min, plus préférablement 4-6 min, et dans laquelle le traitement thermique comprend la soumission des particules de plaque de plâtre à une température dans la plage de 300°C - 550°C, de préférence 350°C - 550°C, plus préférablement 400°C - 500°C.

2. Méthode selon la revendication 1, dans laquelle le traitement thermique comprend la soumission des particules de plaque de plâtre ou de la fraction de gypse de celles-ci à une température de 300°C - 390°C, de préférence 310°C - 350°C.

3. Méthode selon l'une quelconque des revendications 1 ou 2, dans laquelle, avant ou après l'étape a), une fraction de couche avant et arrière, en particulier une fraction de papier et/ou de carton, est séparée d'une fraction de gypse du matériau de plaque de plâtre.

4. Méthode selon l'une quelconque des revendications 1, 2 ou 3, dans laquelle l'étape b) est réalisée dans une atmosphère qui a une teneur en O₂ de > 10 % vol., de préférence > 15 % vol.

5. Utilisation d'une source de sulfate de calcium obtenue par une méthode selon l'une quelconque des revendications 1 à 4 comme composant dans la production d'un liant hydraulique.

6. Utilisation selon la revendication 5, dans laquelle la source de sulfate de calcium est mélangée avec du clinker et le mélange résultant est broyé afin d'obtenir du ciment Portland ordinaire.
